# EUROPEAN PATENT APPLICATION

(11) **EP 4 729 563 A1**
(43) Date of publication of application: **22.04.2026**
(21) Application number: 25205024.0
(22) Date of filing: 26.09.2025
(51) Int. Cl.: C08G 73/10, C08G 73/12, C08L 79/08

(54) **HEAT-CURABLE RESIN COMPOSITION**

(30) Priority: 17.10.2024 JP 2024181863
(71) Applicant: SHIN-ETSU CHEMICAL CO., LTD.,, Chiyoda-ku, Tokyo 1000005 (JP)
(72) Inventor: IGUCHI, Hiroyuki, Gunma, 3790224 (JP); TSUTSUMI, Yoshihiro, Gunma, 379-0224 (JP); KUDO, Yuki, Gunma, 3790224 (JP); IWASAKI, Masayuki, Gunma, 379-0224 (JP)
(74) Representative: Angerhausen, Christoph

(57) **Abstract**

Provided is a curable resin composition that forms a cured product that not only has low relative permittivity and low dielectric tangent but also is less likely to cause peeling of copper after being treated with a desmear solution. The curable resin composition includes a curing catalyst and first and second cyclic imide resins respectively represented by 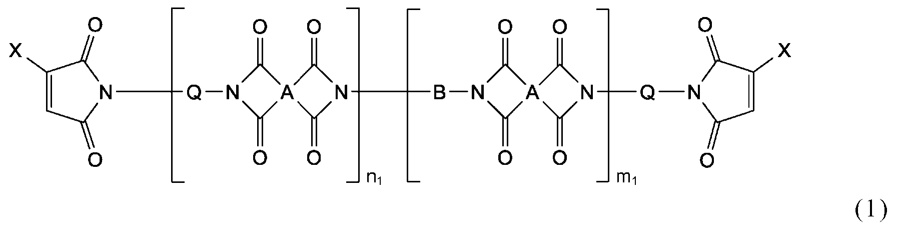 and 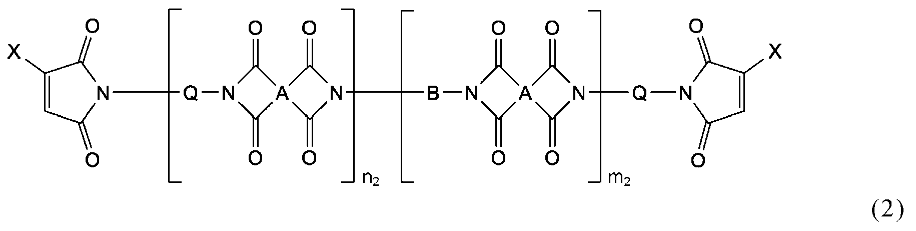 wherein A independently represents a tetravalent organic group having a cyclic structure, Q independently represents a divalent aliphatic hydrocarbon group having 6 or more carbon atoms or a dimer acid frame-derived divalent hydrocarbon group, B independently represents an arylene group having 6 or more carbon atoms, X is a hydrogen atom or a methyl group, n₁ is 0 to 200 and m₁ is 0 to 200 provided that n₁ + m₁ satisfies 21 to 400, and n₂ is 0 to 10 and m₂ is 0 to 10.

## Description

### BACKGROUND OF THE INVENTION

### Field of the invention

The present invention relates to a heat-curable resin composition.

### Background art

In recent years, as for electronic devices such as mobile communication devices, typified by mobile phones, base station devices thereof, network infrastructure equipment such as servers and routers, and large-scale computers, the speed of the signals used in these devices and equipment is getting higher, and the capacities thereof are getting larger year after year. In this regard, as printed-wiring boards installed in these electronic devices utilize higher frequencies such as those in the 20 GHz region; demanded is an insulating material for a printed-wiring board characterized by its low relative permittivity and low dielectric tangent. Potential candidates of materials that satisfy these characteristics include an epoxy resin, a modified polyphenyleneether resin, and a maleimide resin (See JP-A-2019-1965, JP-A-2018-28044, JP-A-2020-176190, and JP-A-2021-181531).

Traditional approaches employ roughening of the conductor circuit to improve adhesion by utilizing the anchoring effect when bonding insulating materials. However, at high-frequency bands, a roughened conductor circuit induces a significant electric current on the surface of the conductor due to the skin effect, and the roughened conducting surface elongates the flow path of the electrical signal, thus leading to delays. Consequently, the conductor circuit must have a surface as smooth as possible when it is used at a high frequency band. However, this smoothness compromises the anchoring effect required for adhesiveness. Aliphatic maleimide resins have low relative permittivity and low dielectric tangent, and exhibits high adhesion force to low-profile copper (See, JP-A-2020-12026).

### SUMMARY OF THE INVENTION

However, a resin composition containing an aliphatic maleimide resin is disadvantageous in that it has low chemical resistance due to its alkyl group of the aliphatic maleimide and tends to cause peeling of copper when treated with a desmear solution such as a permanganate solution after the formation of via holes by drilling or laser processing during the production of printed-wiring boards.

Thus, it is an object of the present invention to provide a curable resin composition that forms a cured product that not only has low relative permittivity and low dielectric tangent but also is less likely to cause peeling of copper after being treated with a desmear solution.

The inventors of the present invention have diligently conducted a series of studies to solve the above problems and have found that the curable resin composition as set forth below can achieve the above object, thus completing the present invention.

That is, the present invention provides the following resin composition and other products.
<1> A curable resin composition comprising:
   (A) a first cyclic imide resin represented by formula (1) defined as 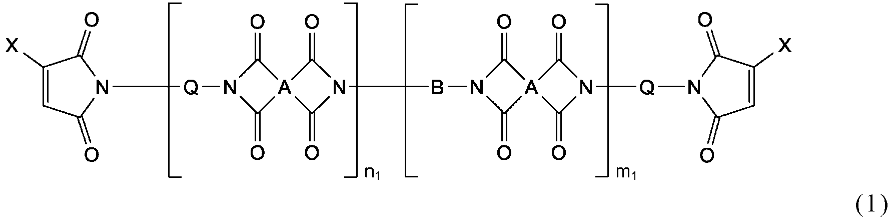 wherein, in the formula (1), each A independently represents a tetravalent organic group having a cyclic structure, each Q independently represents a divalent aliphatic hydrocarbon group having 6 or more carbon atoms and optionally containing heteroatom(s) or a dimer acid frame-derived divalent hydrocarbon group, each B independently represents an arylene group having 6 or more carbon atoms and optionally containing heteroatom(s), each X is a hydrogen atom or a methyl group, n₁ is a number of 0 to 200 and m₁ is a number of 0 to 200 provided that n₁ + m₁ satisfies 21 to 400, and repeating units identified by n₁ and m₁ may be present in any order;
   (B) a second cyclic imide resin in an amount of 1 to 40 parts by mass per 100 parts by mass of the first cyclic imide resin (A), said second cyclic imide resin represented by formula (2) defined as 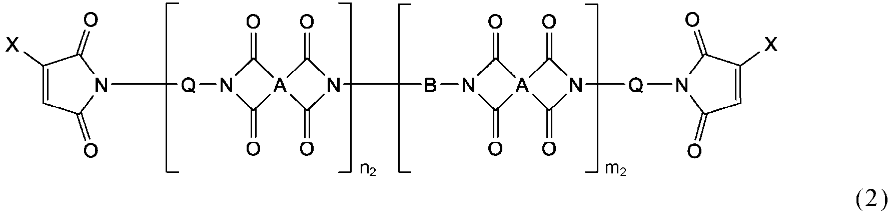 wherein, in the formula (2), A, Q, B, and X are as defined above, n₂ is a number of 0 to 10 and m₂ is a number of 0 to 10 provided that n₂ + m₂ satisfies 0 to 20, and repeating units identified by n₂ and m₂ may be present in any order; and
   (C) a curing catalyst in an amount of 0.01 to 10 parts by mass per 100 parts by mass of the first cyclic imide resin (A).
<2> The curable resin composition according to <1>, wherein the second cyclic imide resin (B) is a cyclic imide resin represented by formula (3) defined as 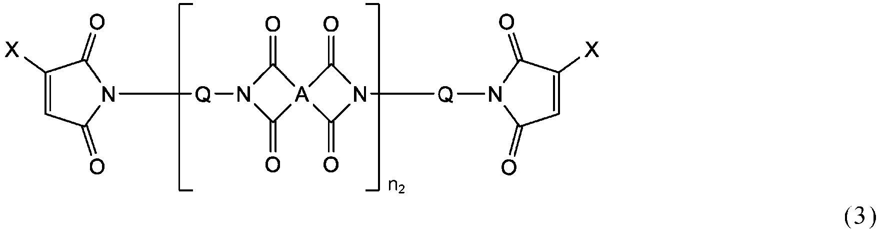 wherein, in the formula (3), A, Q, X, and n₂ are as defined above.

The curable resin composition according to the present invention forms a cured product that not only has low relative permittivity and low dielectric tangent but also is less likely to cause peeling of copper after being treated with a desmear solution. Thus, the curable resin composition according to the present invention is useful in applications such as base films, coverlay films, and semiconductor encapsulation materials for copper-clad laminates, printed-wiring boards, and flexible printed-wiring boards.

### DETAILED DESCRIPTION OF THE INVENTION

A curable resin composition according to the present invention will be described in detail hereunder.

### [(A) First Cyclic imide resin represented by formula (1) defined below]

The first cyclic imide resin as a component (A) is an essential component of the curable resin composition according to the present invention and is represented by the following formula (1). Because the curable resin composition according to the present invention contains the component (A), the curable resin composition forms a cured product that has low relative permittivity and low dielectric tangent and is less likely to cause peeling of copper after being treated with a desmear solution.

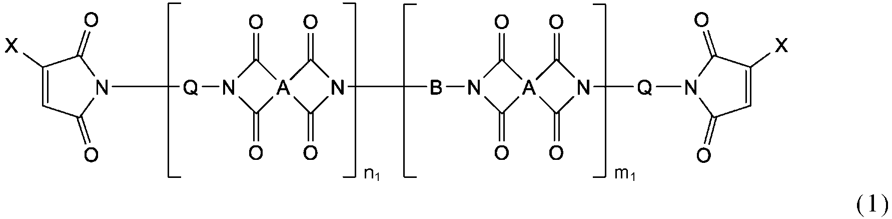

In the formula (1), each A independently represents a tetravalent organic group having a cyclic structure, each Q independently represents a divalent aliphatic hydrocarbon group having 6 or more carbon atoms and optionally containing heteroatom(s) or a dimer acid frame-derived divalent hydrocarbon group. Each B independently represents an arylene group having 6 or more carbon atoms and optionally containing heteroatom(s). Each X represents a hydrogen atom or a methyl group, n₁ is 0 to 200, and m₁ is 0 to 200 provided that n₁ + m₁ satisfies 21 to 400. Repeating units identified by n₁ and m₁ may be present in any order which is not particularly limited.

Here, the organic group represented by A in the formula (1) is independently a tetravalent organic group having a cyclic structure; particularly, it is preferred that A be any one of tetravalent organic groups represented by the following structural formulae: 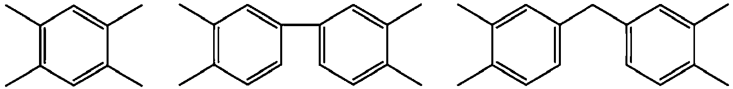 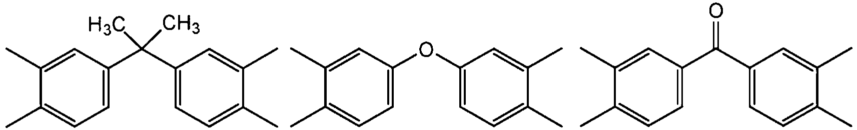 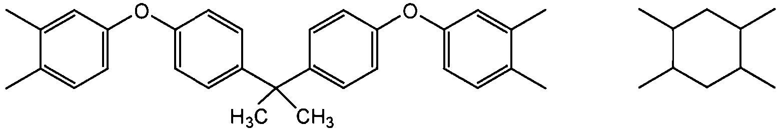 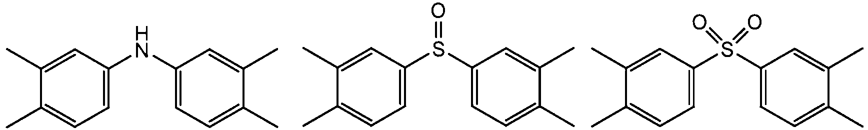 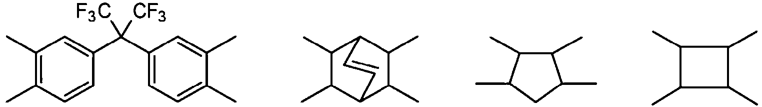 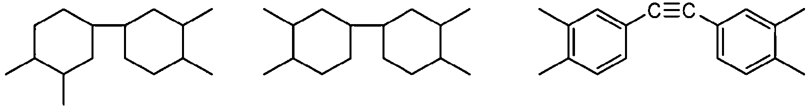 wherein bonds that are yet unbonded to substituent groups are to be bonded to carbonyl carbons forming the cyclic imide structures in the formula (1).

In the formula (1), Q independently is an organic group and represents a divalent aliphatic hydrocarbon group having 6 or more carbon atoms and optionally containing heteroatom(s) or a dimer acid frame-derived divalent hydrocarbon group, and it is preferred that Q be a dimer acid frame-derived divalent hydrocarbon group or a divalent aliphatic hydrocarbon group represented by any one of formulae defined as:

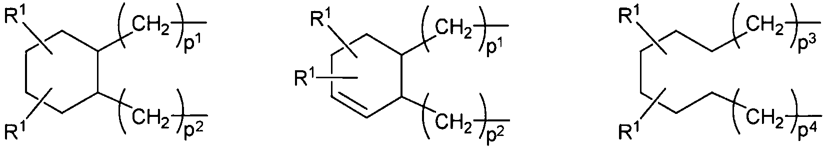

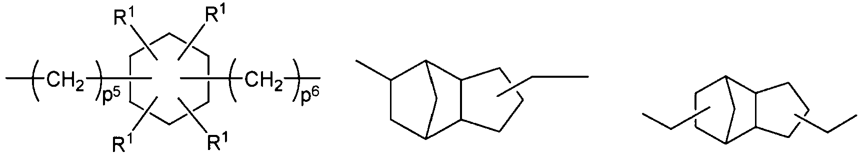

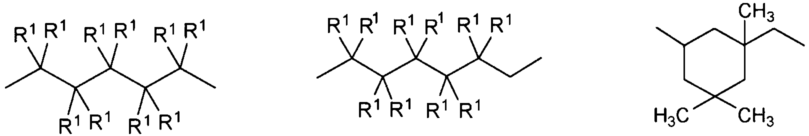

In the above structural formulae, bonds that are yet unbonded to substituent groups are to be bonded to the nitrogen atoms forming the cyclic imide structures in the formula (1).

In the above structural formulae, each R¹ independently represents a hydrogen atom or a linear or branched alkyl group having 1 to 20 carbon atoms.

It is preferred that R¹ be a hydrogen atom or a linear or branched alkyl group having 1 to 10 carbon atoms, more preferably a hydrogen atom or a linear alkyl group having 1 to 10 carbon atoms.

In the above structural formulae, p¹ and p² are each a number of 5 or more, preferably a number of 5 to 12, more preferably a number of 6 to 10, and may be identical to or different from each other.

In the above structural formulae, p³ and p⁴ are each a number of 0 or more, preferably a number of 0 to 4, more preferably a number of 0 to 3, and may be identical to or different from each other.

In the above structural formulae, p⁵ and p⁶ are each a number of 0 or more, preferably a number of 0 to 4, more preferably a number of 0 to 2, and may be identical to or different from each other.

The term "dimer acid frame-derived divalent hydrocarbon group" refers to a group derived from dimer acid, which is a liquid fatty acid whose main component is a dicarboxylic acid having 36 carbon atoms and which is produced by dimerizing an unsaturated fatty acid having 18 carbon atoms and employing a natural substance such as a vegetable fat or oil as its raw material. Dimer acid is not a single type of frame, but may have multiple types of structures, and there exist several types of isomers. The dimer acid frame refers to a group derived from dimer diamine, which has a structure obtained by substituting carboxy groups in dimer acid with primary aminomethyl groups. As for the dimer acid frame-derived divalent hydrocarbon group, those having a structure with a reduced number of carbon-carbon double bonds in the dimer acid frame-derived hydrocarbon group due to a hydrogenation reaction are more preferred from the perspectives of heat resistance and reliability of a cured product.

In general, dimer acid may contain a trimer (trimer acid) because a natural substance such as a vegetable fat or oil is used as its raw material. It is preferred that, of the dimer acid-derived and trimer acid-derived hydrocarbon groups, the dimer acid-derived hydrocarbon group be contained in a high proportion of, for example, 95% by mass or more, because such a composition has excellent dielectric properties, easily becomes less viscous when heated and thus exhibits excellent moldability, and tends to be less susceptible to moisture absorption.

As described above, a dimer acid frame may have multiple types of structures; therefore, in this specification, a dimer acid frame-derived divalent hydrocarbon group may be denoted by -C₃₆H₇₀- as its average structure.

Each organic group represented by B in the formula (1) independently represents an arylene group having 6 or more carbon atoms and optionally containing heteroatom(s), and preferably is an arylene group represented by any one of the structural formulae defined as:

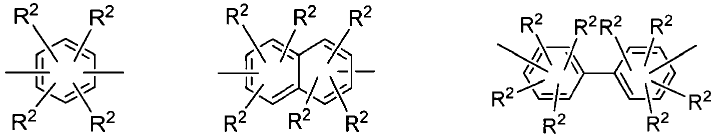

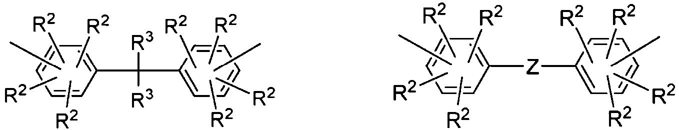

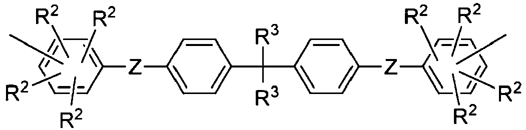

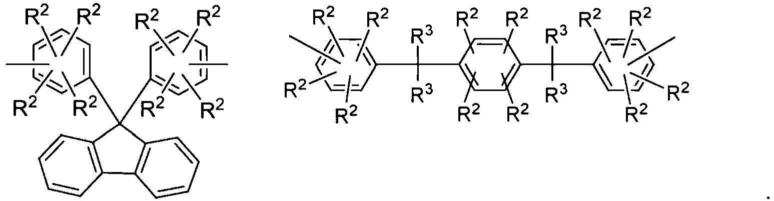

In the above structural formulae, bonds that are yet unbonded to substituent groups are to be bonded to the nitrogen atoms forming the cyclic imide structures in the formula (1).

In the above formulae, each R² independently represents a hydrogen atom, a halogen atom, or an alkyl group having 1 to 6 carbon atoms, and preferably is a hydrogen atom or a methyl group.

In the above formulae, each R³ independently represents a hydrogen atom, a halogen atom, a methyl group, or a trifluoromethyl group, and preferably is a methyl group or a trifluoromethyl group.

In the above formulae, each Z represents an oxygen atom, a sulfur atom, or a methylene group and preferably is an oxygen atom.

In the formula (1), each X represents a hydrogen atom or a methyl group. In the formula (1), n₁ is a number of 0 to 200 and m₁ is a number of 0 to 200 provided that n₁ + m₁ satisfies 21 to 400. The curable resin composition according to the present invention contains the component (A) whose n₁ + m₁ satisfies 21 to 400 in a specific amount and thus forms a cured product that is less likely to cause peeling of copper after being treated with a desmear solution. It is preferred that n₁ + m₁ be 21 to 300, more preferably, 21 to 250, and even more preferably 21 to 200.

The values of n₁ and m₁ may be any values which are not particularly limited as long as they are each in a range of 0 to 200 and n₁ + m₁ satisfies 21 to 400. It is preferred that n₁ be 21 to 200, more preferably 25 to 150, when m₁ = 0. It is also preferred that each of n₁ and m₁ be 11 to 100, more preferably 15 to 50, when m₁ ≠ 0.

Repeating units identified by n₁ and m₁ may be present in any order which is not particularly limited.

While there are no particular restrictions on the weight average molecular weight (Mw) of the first cyclic imide resin represented by the formula (1) provided that the weight average molecular weight (Mw) is a value determined such that n₁ + m₁ satisfies 21 to 400, it is preferred that the weight average molecular weight (Mw) be 10,000 to 1,000,000, more preferably 20,000 to 500,000, even more preferably 40,000 to 300,000. The first cyclic imide resin having a weight average molecular weight (Mw) within these ranges is preferable because it is less likely to cause peeling of copper after being treated with a desmear solution and allows the cyclic imide groups at the ends to be efficiently reacted.

The term "Weight average molecular weight (Mw)" as used herein refers to a weight average molecular weight measured by gel permeation chromatography (GPC) using polystyrene as a reference substance under the following conditions:

### [GPC Measurement Conditions]

Developing solvent: tetrahydrofuran
Flow rate: 0.6 mL/min
Column: TSK Guardcolumn Super H-L
   TSKgel Super H4000 (6.0 mm I.D. × 15 cm × 1)
   TSKgel Super H3000 (6.0 mm I.D. × 15 cm × 1)
   TSKgel Super H2000 (6.0 mm I.D. × 15 cm × 2)
   (all manufactured by Tosoh Corporation)
Column temperature: 40°C
Sample injection volume: 20 µL (tetrahydrofuran solution with sample concentration of 0.5% by mass)
Detector: Differential refractive index detector (RI)

There are no particular restrictions on the methods for producing the first cyclic imide resin as the component (A). For example, an acid anhydride and a diamine may be reacted with each other to synthesize an amine-terminated compound, followed by reacting the amine-terminated compound with an excessive amount of maleic anhydride or citraconic anhydride to thereby produce the first cyclic imide resin. The acid anhydride and diamine are reacted with each other at a designated equivalent ratio that satisfies the provisions for n₁ and m₁ as set forth in the formula (1). It is preferred that the diamine-to-acid anhydride equivalent ratio (diamine/acid anhydride) be 1.001 to 1.35, more preferably 1.01 to 1.3, and even more preferably 1.03 to 1.2.

Examples of such acid anhydrides include pyromellitic anhydride, maleic anhydride, succinic anhydride, 4,4'-carbonyldiphthalic anhydride, 4,4'-diphthalic anhydride, 4,4'-sulfonyldiphthalic anhydride, 4,4'-oxydiphthalic anhydride, and 4,4'-(4,4'-isopropylidenediphenoxy)diphthalic anhydride. Any one of these acid anhydrides may be used alone, or two or more of them may be used in combination, for example, depending on the purpose and use. It is preferred in terms of the electric properties of the first cyclic imide resin that the acid anhydride be pyromellitic anhydride, 4,4'-oxydiphthalic anhydride, or 4,4'-(4,4'-isopropylidenediphenoxy)diphthalic anhydride.

Examples of such diamine include aromatic diamines such as 2,2-bis(4-(4-aminophenoxy)phenyl)propane, 4,4'-diamino-3,3'-dimethyldiphenylmethane, 4,4'-diamino-3,3'-diethyldiphenylmethane, 4,4'-diaminodiphenyl ether, 4,4'-diamino-3,3',5,5'-tetraethyldiphenylmethane, bis[4-(4-aminophenoxy)phenyl]sulfone, 4,4'-diaminodiphenylmethane, and 1,3-bis(4-aminophenoxy)benzene; aliphatic diamines such as 1,12-diaminododecane, 1,10-diaminodecane, octyldiamine, 1,3-di(aminomethyl)cyclohexane, 1-amino-4-(aminomethyl)cyclohexane, 1,3-diaminoadamantane, isophoronediamine, 2,4,4-trimethylhexane-1,6-diamine, 2-methylpentane-1,5-diamine, and 3(4),8(9)-bis(aminomethyl)tricyclo[5.2.1.0(2,6)]decane; and dimer diamine. Any one of these diamines may be used alone, or two or more of them may be used in combination, for example, depending on the purpose and use. It is preferred in terms of the electric properties of the first cyclic imide compound that the diamine be an aromatic diamine such as 2,2-bis(4-(4-aminophenoxy)phenyl)propane, 4,4'-diamino-3,3'-dimethyldiphenylmethane, 4,4'-diamino-3,3'-diethyldiphenylmethane, 4,4'-diaminodiphenyl ether, or 4,4'-diamino-3,3',5,5'-tetraethyldiphenylmethane, an aliphatic diamine such as 1,12-diaminododecane, 1,10-diaminodecane, octyldiamine, 1,3-di(aminomethyl)cyclohexane, 1-amino-4-(aminomethyl)cyclohexane, 1,3-diaminoadamantane, isophoronediamine, 2,4,4-trimethylhexane-1,6-diamine, 2-methylpentane-1,5-diamine; or dimer diamine; and it is particularly preferred that the diamine be 1,12-diaminododecane, dimer diamine, or isophoronediamine.

The equivalent amount of cyclic imide groups of the component (A) is preferably 0.0001 to 0.1 mol/100 g, more preferably 0.0003 to 0.05 mol/100 g, even more preferably 0.0005 to 0.03 mol/100 g, yet even more preferably 0.02 to 0.2 mol/100 g. The component (A) contained therein within these ranges is preferable because it is less likely to cause peeling of copper after being treated with a desmear solution and allows the cyclic imide groups at the ends to be efficiently reacted.

One type of the component (A) may be used alone, or two or more types thereof may be used in combination.

The component (A) may be contained in the resin composition in an amount of 10 to 95% by mass, preferably of 15 to 90% by mass, and more preferably of 20 to 80% by mass based on the mass of the resin composition.

### [(B) Second Cyclic imide resin represented by formula (1) defined below]

The second cyclic imide resin as a component (B) is represented by the following formula (2). Because the curable resin composition according to the present invention contains the component (B), the curable resin composition not only has low relative permittivity and low dielectric tangent, but also exhibits low melt viscosity during heating and enhanced adhesiveness to a base material of copper or of other materials.

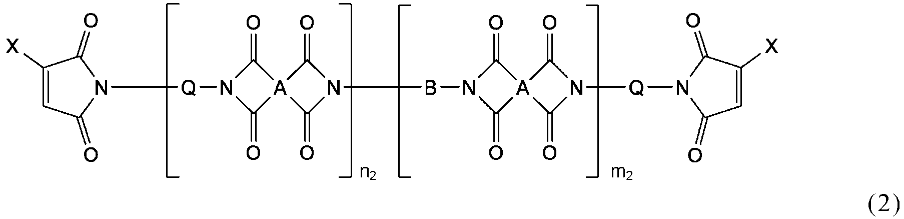

In the formula (2), A, Q, B, and X are as defined above, n₂ is a number of 0 to 10 and m₂ is a number of 0 to 10 provided that n₂ + m₂ satisfies 0 to 20. Repeating units identified by n₂ and m₂ may be present in any order which is not particularly limited.

In the formula (2), n₂ is 0 to 10, more preferably 0 to 8, and even more preferably 0 to 5.

In the formula (2), m₂ is 0 to 10, more preferably 0 to 8, and even more preferably 0 to 5.

In the formula (2), n₂ + m₂ is 0 to 20, more preferably 0 to 16, and even more preferably 0 or 2 to 10.

In addition, when there are a plurality of repeating units each identified by n₂ or m₂, the order of the repeating units is not limited.

While there are no particular restrictions on the weight average molecular weight (Mw) of the second cyclic imide resin represented by the formula (2) provided that the weight average molecular weight (Mw) is a value determined such that n₂ + m₂ satisfies 0 to 20, it is preferred that the weight average molecular weight (Mw) be 300 to 30,000, more preferably 500 to 20,000, even more preferably 1,000 to 10,000. The second cyclic imide resin having a weight average molecular weight (Mw) within these ranges is preferable because it results in a composition that exhibits low melt viscosity during heating and enhanced adhesiveness to a base material of copper or of other materials.

It is preferred that the component (B) be a cyclic imide resin represented by formula (3) defined as 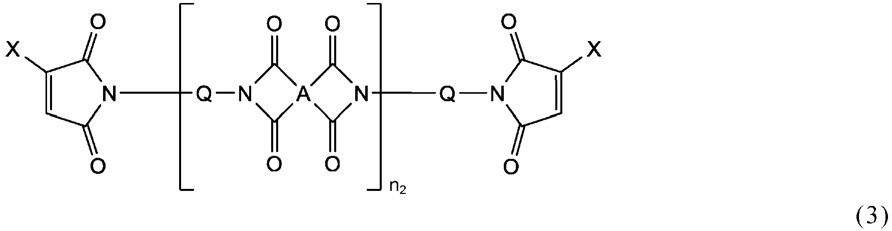 wherein the formula (3) reduces to the formula (2) above when m₂ = 0. Accordingly, in the formula (3), A, Q, X, and n₂ are as defined in the formula (2) and preferable embodiments are the same as above.

There are no particular restrictions on the methods for producing the second cyclic imide resin as the component (B). For example, the second cyclic imide resin may be produced by a method of reacting a diamine with an excessive amount of maleic anhydride or citraconic anhydride. Alternatively, the second cyclic imide resin may be produced by a method of reacting an acid anhydride with a diamine to synthesize an amine-terminated compound and then reacting the amine-terminated compound with an excessive amount of maleic anhydride or citraconic anhydride. The diamine and the acid anhydride mentioned above are reacted at a designated equivalent ratio that satisfies the specified values of n₁ and m₁ in the formula (1). The ratio of the prepared amount of diamine to the acid anhydride may be any value which is not particularly limited, but it is preferred that the ratio (diamine/acid anhydride) be 1.35 to 3.0, more preferably 1.4 to 2.5, and even more preferably 1.5 to 2.0.

Examples of such acid anhydrides include pyromellitic anhydride, maleic anhydride, succinic anhydride, 4,4'-carbonyldiphthalic anhydride, 4,4'-diphthalic anhydride, 4,4'-sulfonyldiphthalic anhydride, 4,4'-oxydiphthalic anhydride, and 4,4'-(4,4'-isopropylidenediphenoxy)diphthalic anhydride. Any one of these acid anhydrides may be used alone, or two or more of them may be used in combination, for example, depending on the purpose and use. It is preferred in terms of the electric properties of the second cyclic imide resin that the acid anhydride be pyromellitic anhydride, 4,4'-oxydiphthalic anhydride, or 4,4'-(4,4'-isopropylidenediphenoxy)diphthalic anhydride.

Examples of such diamine include aromatic diamines such as 2,2-bis(4-(4-aminophenoxy)phenyl)propane, 4,4'-diamino-3,3'-dimethyldiphenylmethane, 4,4'-diamino-3,3'-diethyldiphenylmethane, 4,4'-diaminodiphenyl ether, 4,4'-diamino-3,3',5,5'-tetraethyldiphenylmethane, bis[4-(4-aminophenoxy)phenyl]sulfone, 4,4'-diaminodiphenylmethane, and 1,3-bis(4-aminophenoxy)benzene; aliphatic diamines such as 1,12-diaminododecane, 1,10-diaminodecane, octyldiamine, 1,3-di(aminomethyl)cyclohexane, 1-amino-4-(aminomethyl)cyclohexane, 1,3-diaminoadamantane, isophoronediamine, 2,4,4-trimethylhexane-1,6-diamine, 2-methylpentane-1,5-diamine, and 3(4),8(9)-bis(aminomethyl)tricyclo[5.2.1.0(2,6)]decane; and dimer diamine. Any one of these diamines may be used alone, or two or more of them may be used in combination, for example, depending on the purpose and use. It is preferred in terms of the electric properties of the second cyclic imide compound that the diamine be an aromatic diamine such as 2,2-bis(4-(4-aminophenoxy)phenyl)propane, 4,4'-diamino-3,3'-dimethyldiphenylmethane, 4,4'-diamino-3,3'-diethyldiphenylmethane, 4,4'-diaminodiphenyl ether, or 4,4'-diamino-3,3',5,5'-tetraethyldiphenylmethane, an aliphatic diamine such as 1,12-diaminododecane, 1,10-diaminodecane, octyldiamine, 1,3-di(aminomethyl)cyclohexane, 1-amino-4-(aminomethyl)cyclohexane, 1,3-diaminoadamantane, isophoronediamine, 2,4,4-trimethylhexane-1,6-diamine, 2-methylpentane-1,5-diamine; or dimer diamine; and it is particularly preferred that the diamine be 1,12-diaminododecane, dimer diamine, or isophoronediamine.

The equivalent amount of the cyclic imide groups of the component (B) is preferably 0.01 to 0.5 mol/100 g, more preferably 0.03 to 0.3 mol/100 g, even more preferably 0.05 to 0.1 mol/100 g, yet even more preferably 0.02 to 0.2 mol/100 g. The component (B) contained therein within these ranges is preferable because it allows the cyclic imide groups at the ends to be efficiently reacted.

The component (B) is added therein in an amount of 1 to 40 parts by mass, more preferably 5 to 30 parts by mass, and more preferably 10 to 25 parts by mass per 100 parts by mass of the component (A). The resin composition containing the component (B) in an amount of less than 1 parts by mass per 100 parts by mass of the component (A) results in a melt viscosity that is not sufficiently low, thus reducing its adhesiveness to copper. The resin composition containing the component (B) in an amount of more than 40 parts by mass per 100 parts by mass of the component (A) potentially causes peeling of copper when the cured product of the curable resin composition is treated with a desmear solution.

The second cyclic imide resin as the component (B) may be a commercial product. Examples of such commercial products include BMI-689, BMI-1400, BMI-1500 (all manufactured by Designer Molecules Inc.), SLK-6895, and SLK-1500 (all manufactured by Shin-Etsu Chemical Co., Ltd.) One type of the second cyclic imide resin as the component (B) may be used alone, or two or more types thereof may be used in combination.

(C) Curing Catalyst

The component (C) is a curing catalyst for promoting the curing of the resin composition. While there are no particular restrictions on the curing catalyst as the component (C), examples thereof include thermal radical polymerization initiators and thermal anionic polymerization initiators.

Examples of the thermal radical polymerization initiators include organic peroxides such as methyl ethyl ketone peroxide, methylcyclohexanone peroxide, methyl acetoacetate peroxide, acetylacetone peroxide, 1,1-bis(t-butylperoxy)-3,3,5-trimethylcyclohexane, 1,1-bis(t-hexylperoxy)cyclohexane, 1,1-bis(t-hexylperoxy)-3,3,5-trimethylcyclohexane, 1,1-bis(t-butylperoxy)cyclohexane, 2,2-bis(4,4-di-t-butylperoxycyclohexyl)propane, 1,1-bis(t-butylperoxy)cyclododecane, n-butyl-4,4-bis(t-butylperoxy)valerate, 2,2-bis(t-butylperoxy)butane, 1,1-bis(t-butylperoxy)-2-methylcyclohexane, t-butyl hydroperoxide, p-menthane hydroperoxide, 1,1,3,3-tetramethylbutyl hydroperoxide, t-hexyl hydroperoxide, dicumyl peroxide, 2,5-dimethyl-2,5-bis(t-butylperoxy)hexane, α,α'-bis(t-butylperoxy)diisopropylbenzene, t-butylcumyl peroxide, di-t-butyl peroxide, 2,5-dimethyl-2,5-bis(t-butylperoxy)hexyne-3, isobutyryl peroxide, 3,5,5-trimethylhexanoyl peroxide, octanoyl peroxide, lauroyl peroxide, cinnamoyl peroxide, m-toluoyl peroxide, benzoyl peroxide, diisopropyl peroxydicarbonate, bis(4-t-butylcyclohexyl) peroxydicarbonate, di-3-methoxybutyl peroxydicarbonate, di-2-ethylhexyl peroxydicarbonate, di-sec-butyl peroxydicarbonate, di(3-methyl-3-methoxybutyl) peroxydicarbonate, di(4-t-butylcyclohexyl) peroxydicarbonate, α,α'-bis(neodecanoylperoxy)diisopropylbenzene, cumyl peroxyneodecanoate, 1,1,3,3-tetramethylbutyl peroxyneodecanoate, 1-cyclohexyl-1-methylethyl peroxyneodecanoate, t-hexyl peroxyneodecanoate, t-butyl peroxyneodecanoate, t-hexyl peroxypivalate, t-butyl peroxypivalate, 2,5-dimethyl-2,5-bis(2-ethylhexanoylperoxy)hexane, 1,1,3,3-tetramethylbutyl peroxy-2-ethylhexanoate, 1-cyclohexyl-1-methylethyl peroxy-2-ethylhexanoate, t-hexyl peroxy-2-ethylhexanoate, t-butyl peroxy-2-ethylhexanoate, t-butyl peroxyisobutyrate, t-butylperoxymaleic acid, t-butyl peroxylaurate, t-butyl peroxy-3,5,5-trimethylhexanoate, t-butylperoxyisopropyl monocarbonate, t-butyl peroxy-2-ethylhexyl monocarbonate, 2,5-dimethyl-2,5-bis(benzoylperoxy)hexane, t-butyl peroxyacetate, t-hexyl peroxybenzoate, t-butyl peroxy-m-toluoylbenzoate, t-butyl peroxybenzoate, bis(t-butylperoxy) isophthalate, t-butylperoxyallyl monocarbonate, and 3,3',4,4'-tetra(t-butylperoxycarbonyl)benzophenone; and azo compounds such as 2,2'-azobis(N-butyl-2-methylpropionamide), 2,2'-azobis(N-cyclohexyl-2-methylpropionamide), 2,2'-azobis[N-(2-methylpropyl)-2-methylpropionamide], 2,2'-azobis[N-(2-methylethyl)-2-methylpropionamide], 2,2'-azobis(N-hexyl-2-methylpropionamide), 2,2'-azobis(N-propyl-2-methylpropionamide), 2,2'-azobis(N-ethyl-2-methylpropionamide), 2,2'-azobis[2-methyl-N-(2-hydroxyethyl)propionamide], 2,2'-azobis[N-(2-propenyl)-2-methylpropionamide], 2,2'-azobis {2-methyl-N-[1,1-bis(hydroxymethyl)-2-hydroxyethyl]propionamide}, 2,2'-azobis[N-(2-propenyl)-2-methylpropionamide], and dimethyl-1,1'-azobis(1-cyclohexanecarboxylate).

Examples of the thermal anionic polymerization initiators include amine compounds such as triethylamine, triethylenediamine, 2-(dimethylaminomethyl)phenol, 1,8-diazabicyclo[5.4.0]undecene-7, tris(dimethylaminomethyl)phenol, and benzyldimethylamine; imidazole compounds such as 2-methylimidazole, 2-ethylimidazole, 2-phenylimidazole, 2-ethyl-4-methylimidazole, 2-undecylimidazole, 1-cyanoethyl-2-ethyl-4-methylimidazole, 2,4-diamino-6-[2-(2-methyl-1-imidazolyl)ethyl]-1,3,5-triazine, and 2-phenyl-4-hydroxy-5-methylimidazole; organophosphorus compounds such as triphenylphosphine, tributylphosphine, trioctylphosphine, tetrabutylphosphonium hexafluorophosphate, tetrabutylphosphonium tetraphenylborate, tetrabutylphosphonium acetate, tetraphenylphosphonium tetraphenylborate, tetraphenylphosphonium bromide, tetrabutylphosphonium bromide, tetrabutylphosphonium laurate, tetraphenylphosphonium hydrogen phthalate, bis(tetraphenylphosphonium) dihydrogen pyromellitate, and bis(tetrabutylphosphonium) dihydrogen pyromellitate. Of these, thermal anionic polymerization initiators are preferred, and 2-ethyl-4-methylimidazole, 1-cyanoethyl-2-ethyl-4-methylimidazole, 2,4-diamino-6-[2-(2-methyl-1-imidazolyl)ethyl]-1,3,5-triazine, and 2-phenyl-4-hydroxy-5-methylimidazole are particularly preferred.

Any one of these curing catalysts may be used alone, or two or more of them may be used in combination.

The component (C) is added therein in an amount of 0.01 to 10 parts by mass, more preferably 0.1 to 5 parts by mass, per 100 parts by mass of the component (A). The component (C) contained therein in an amount of less than 0.01 parts by mass per 100 parts by mass of the component (A) risks insufficient curing of the resin composition. The component (C) contained therein in an amount of larger than 10 parts by mass per 100 parts by mass of the component (A) causes a detrimental effect on the physical properties of the cured product of the resin composition.

### [Inorganic Filler]

The curable resin composition according to the present invention may further contain, as necessary, an inorganic filler.

While there are no particular restrictions on the inorganic filler, examples thereof include silica, metal oxides such as titanium dioxide, yttrium oxide, aluminum oxide, magnesium oxide, zinc oxide, and beryllium oxide; boron nitride, silicon nitride, and metal nitrides such as aluminum nitride; carbon-containing particles of, for example, silicon carbide, diamond, and graphene; hollow particles such as silica balloons (hollow silica), carbon balloons, alumina balloons, and aluminosilicate balloons; elemental metals such as gold, silver, copper, palladium, aluminum, nickel, iron, cobalt, titanium, manganese, zinc, tungsten, platinum, lead, and tin; alloys such as solder, and steel; magnetic metal alloys such as stainless steel, Fe-Cr-Al-Si alloys, Fe-Si-Al alloys, Fe-Ni alloys, Fe-Cu-Si alloys, Fe-Si alloys, Fe-Si-B(-Cu-Nb) alloys, Fe-Si-Cr-Ni alloys, Fe-Si-Cr alloys, and Fe-Si-Al-Ni-Cr alloys; and ferrites such as hematite (Fe₂O₃), magnetite (Fe₃O₄), Mn-Zn-based ferrites, Ni-Zn-based ferrites, Mg-Mn-based ferrites, Zr-Mn-based ferrites, Ti-Mn-based ferrites, Mn-Zn-Cu-based ferrites, barium ferrite, and strontium ferrite. Any one of these may be used alone, or two or more of them may be used in combination.

By adding a metal oxide, a metal nitride, or carbon-containing particles, it is possible to decrease the coefficient of linear expansion and increase the thermal conductivity of a cured product of the curable resin composition. By adding hollow particles, it is possible to, for example, decrease the relative permittivity, dielectric tangent, and density of a cured product of the curable resin composition. By adding a metal or an alloy, it is possible to, for example, increase the electrical conductivity and thermal conductivity of a cured product of the resin composition. By adding a ferrite, it is possible to impart electromagnetic wave absorption capability to a cured product of the curable resin composition.

While there are no particular restrictions on the shape of the inorganic filler, the inorganic filler may be, for example, spherical, scaly, flaky, needle-shaped, rod-shaped, or oval. In particular, it is preferred that the inorganic filler be spherical, scaly, flaky, oval, or rod-shaped, and it is more preferred that the inorganic filler be spherical, scaly, flaky, or oval.

While there are no particular restrictions on the primary particle diameter of the inorganic filler, it is preferred that the median diameter measured with a laser diffraction particle size distribution analyzer be 0.05 to 500 µm, more preferably 0.1 to 300 µm, even more preferably 1 to 100 µm. It is preferred that the median diameter be within these ranges because the inorganic filler can be readily and uniformly dispersed in the curable resin composition and does not settle, separate, or become unevenly distributed over time.

While there are no particular restrictions on the amount of the inorganic filler added, it is preferred that the inorganic filler be added in an amount of 5 to 300 parts by mass, more preferably 10 to 250 parts by mass, even more preferably 50 to 200 parts by mass, per 100 parts by mass of the component (A) in the curable resin composition according to the present invention.

### [Organic Filler]

The curable resin composition according to the present invention may further contain an organic filler.

While there are no particular restrictions on the organic filler, examples thereof include thermoplastic resin particles (of, for example, acrylic-butadiene copolymer, styrene-butadiene copolymer, acrylonitrile-styrene-butadiene copolymer, or acrylic block copolymer), carbon fiber, cellulose fiber, silicone powder, acrylic powder, polytetrafluoroethylene powder, polyethylene powder, and polypropylene powder. Any one of these may be used alone, or two or more of them may be used in combination.

While there are no particular restrictions on the shape of the organic filler, the organic filler may be, for example, spherical, fibrous, flaky, needle-shaped, rod-shaped, or oval. In particular, it is preferred that the organic filler be spherical, fibrous, flaky, oval, or rod-shaped, and it is more preferred that the organic filler be spherical, fibrous, flaky, or oval.

While there are no particular restrictions on the primary particle diameter of the organic filler, it is preferred that the median diameter measured with a laser diffraction particle size distribution analyzer be 0.05 to 500 µm, more preferably 0.1 to 300 µm, even more preferably 1 to 100 µm. It is preferred that the median diameter be within these ranges because the organic particles can be readily and uniformly dispersed in the curable resin composition and do not settle, separate, or become unevenly distributed over time.

While there are no particular restrictions on the amount of the organic filler added, it is preferred that the organic filler be added in an amount of 1 to 400 parts by mass, more preferably 5 to 200 parts by mass, even more preferably 10 to 100 parts by mass, per 100 parts by mass of the component (A) in the curable resin composition according to the present invention. When the amount of the organic filler added is within these ranges, the strength of the curable resin composition can be increased.

### [Adhesion-imparting agent]

The curable resin composition according to the present invention may contain an adhesion-imparting agent, if necessary, to attain adhesion or tack (pressure-sensitive adhesion). Examples of the adhesion-imparting agents include epoxy resins, acrylic resins, urethane resins, phenolic resins, terpene resins, and silane coupling agents. In particular, epoxy resins, acrylic resins, and silane coupling agents are preferred to impart adhesion, whereas terpene resins are preferred to impart tack (pressure-sensitive adhesion).

While there are no particular restrictions on the epoxy resins, examples thereof include conventionally known epoxy resins which are liquid or solid at room temperature, including a bisphenol A-type epoxy resin; a bisphenol F-type epoxy resin; biphenol-type epoxy resins such as 3,3',5,5'-tetramethyl-4,4'-biphenol type epoxy resin and 4,4'-biphenol type epoxy resin; a biphenyl aralkyl-type epoxy resin; a phenol novolac-type epoxy resin; a cresol novolac-type epoxy resin; a bisphenol A novolac-type epoxy resin; a naphthalenediol-type epoxy resin; a trisphenol methane-type epoxy resin; a trisphenylol methane-type epoxy resin; tetrakisphenylol ethane-type epoxy resin; and an epoxy resin prepared by hydrogenating the aromatic ring of a phenol dicyclopentadiene novolac-type epoxy resin; and an alicyclic epoxy resin.

While there are no particular restrictions on the acrylic resins, examples thereof include lauryl acrylate, stearyl acrylate, isostearyl acrylate, phenoxyethyl acrylate, phenoxydiethylene glycol acrylate, tetrahydrofurfuryl acrylate, isobornyl acrylate, 2-acryloyloxyethylphthalic acid, 2-acryloyloxyethyl acid phosphate, polyethylene glycol diacrylate, dimethyloltricyclodecane diacrylate, trimethylolpropane triacrylate, dipentaerythritol hexaacrylate, dioxane glycol diacrylate, 9,9-bis[4-(2-hydroxyethoxy)phenyl]fluorene diacrylate, lauryl methacrylate, phenoxyethyl methacrylate, phenoxydiethylene glycol methacrylate, tetrahydrofurfuryl methacrylate, isobornyl methacrylate, 2-methacryloyloxyethylphthalic acid, 2-methacryloyloxyethyl acid phosphate, polyethylene glycol dimethacrylate, and dimethyloltricyclodecane dimethacrylate.

While there are no particular restrictions on the terpene resins, examples thereof include homopolymers of terpenes, including monoterpenes such as α-pinene, β-pinene, dipentene, and limonene, sesquiterpenes such as cedrene and farnesene, and diterpenes such as abietic acid, aromatic modified terpene resins that are copolymers of aromatic vinyl compounds such as styrene and α-methylstyrene with the above terpenes, and terpene phenol resins that are copolymers of phenols such as phenol, cresol, hydroquinone, naphthol, and bisphenol A with the above terpenes. Hydrogenated terpene resins obtained by hydrogenation of these terpene resins, for example, can also be used.

While there are no particular restrictions on silane coupling agents, examples thereof include silane coupling agents such as n-propyltrimethoxysilane, n-propyltriethoxysilane, n-octyltrimethoxysilane, n-octyltriethoxysilane, phenyltrimethoxysilane, phenyltriethoxysilane, methyltrimethoxysilane, methyltriethoxysilane, 2-[methoxy(polyethyleneoxy)propyl]-trimethoxysilane, methoxytri(ethyleneoxy)propyltrimethoxysilane, 3-glycidoxypropyltrimethoxysilane, 3-aminopropyltrimethoxysilane, N-phenyl-3-aminopropyltrimethoxysilane, 3-mercaptopropyltrimethoxysilane, 3-(methacryloyloxy)propyltrimethoxysilane, 3-isocyanatopropyltriethoxysilane, and 3-isocyanatopropyltrimethoxysilane.

While there are no particular restrictions on the amount of the adhesion-imparting agent added, it is preferred that the adhesion-imparting agent be added in an amount of 0.1 to 20 parts by mass, more preferably 0.5 to 10 parts by mass, even more preferably 1 to 5 parts by mass, per 100 parts by mass of the component (A). When the amount of the adhesion-imparting agent added is within these ranges, the adhesion force or tack force of the curable resin composition can be further improved without altering the mechanical properties of the curable resin composition.

### [Antioxidant]

The resin composition according to the present invention may contain an antioxidant if necessary.

While there are no particular restrictions on the antioxidant, examples thereof include phenol-based antioxidants such as n-octadecyl-3-(3,5-di-t-butyl-4-hydroxyphenyl)propionate, n-octadecyl-3-(3,5-di-t-butyl-4-hydroxyphenyl)acetate, neododecyl-3-(3,5-di-t-butyl-4-hydroxyphenyl)propionate, dodecyl-β-(3,5-di-t-butyl-4-hydroxyphenyl)propionate, ethyl-α-(4-hydroxy-3,5-di-t-butylphenyl)isobutyrate, octadecyl-α-(4-hydroxy-3,5-di-t-butylphenyl)isobutyrate, octadecyl-α-(4-hydroxy-3,5-di-t-butyl-4-hydroxyphenyl)propionate, 2-(n-octylthio)ethyl-3,5-di-t-butyl-4-hydroxyphenylacetate, 2-(n-octadecylthio)ethyl-3,5-di-t-butyl-4-hydroxyphenylacetate, 2-(n-octadecylthio)ethyl-3-(3,5-di-t-butyl-4-hydroxyphenyl)propionate, 2-(2-stearoyloxyethylthio)ethyl-7-(3-methyl-5-t-butyl-4-hydroxyphenyl)heptanoate, 2-hydroxyethyl-7-(3-methyl-5-t-butyl-4-hydroxyphenyl)propionate, and pentaerythritol tetrakis[3-(3,5-di-t-butyl-4-hydroxyphenyl)propionate]; sulfur-based antioxidants such as dilauryl-3,3'-thiodipropionate, dimyristyl-3,3'-thiodipropionate, distearyl-3,3'-thiodipropionate, ditridecyl-3,3'-thiodipropionate, and pentaerythrityl tetrakis(3-laurylthiopropionate); and phosphorus-based antioxidants such as tridecyl phosphite, triphenyl phosphite, tris(2,4-di-t-butylphenyl) phosphite, 2-ethylhexyl diphenyl phosphite, diphenyl tridecyl phosphite, 2,2-methylenebis(4,6-di-t-butylphenyl)octyl phosphite, distearyl pentaerythritol diphosphite, bis(2,6-di-t-butyl-4-methylphenyl)pentaerythritol diphosphite, and 2-[[2,4,8,10-tetrakis(1,1-dimethylethyl)dibenzo[d,f][1,3,2]dioxaphosphepin-6-yl]oxy]-N,N-bis[2-[[2,4,8,10-tetrakis(1,1-dimethylethyl)dibenzo[d,f][1,3,2]dioxaphosphepin-6-yl]oxy]-ethyl]ethanamine.

While there are no particular restrictions on the amount of the antioxidant added, it is preferred that the antioxidant be added in an amount of 0.00001 to 5 parts by mass, more preferably 0.0001 to 4 parts by mass, even more preferably 0.001 to 3 parts by mass, per 100 parts by mass of the component (A). When the amount of the antioxidant added is within these ranges, the oxidation of the resin composition can be inhibited without altering the mechanical properties of the curable resin composition.

### [Flame Retardant]

The curable resin composition according to the present invention may contain a flame retardant if necessary to attain flame retardancy.

While there are no particular restrictions on the flame retardant, examples thereof include phosphorus-based flame retardants, metal hydrates, halogen-based flame retardants, and guanidine-based flame retardants. Examples of the phosphorus-based flame retardants include red phosphorus, ammonium phosphates such as monoammonium phosphate, diammonium phosphate, triammonium phosphate, and ammonium polyphosphate, inorganic nitrogen-containing phosphorus compounds such as guanidine phosphate and phosphoramides, phosphoric acid, phosphine oxides, triphenyl phosphate, tricresyl phosphate, trixylenyl phosphate, cresyl diphenyl phosphate, cresyl di-2,6-xylenyl phosphate, resorcinol bis(diphenyl phosphate), 1,3-phenylene bis(di-2,6-xylenyl phosphate), bisphenol A-bis(diphenyl phosphate), 1,3-phenylene bis(diphenyl phosphate), divinyl phenylphosphonate, diallyl phenylphosphonate, bis(1-butenyl) phenylphosphonate, phenyl diphenylphosphinate, methyl diphenylphosphinate, phosphazene compounds such as bis(2-allylphenoxy)phosphazene and dicresyl phosphazene, melamine phosphate, melamine pyrophosphate, melamine polyphosphate, melam polyphosphate, melem polyphosphate, 9,10-dihydro-9-oxa-10-phosphaphenanthrene-10-oxide, and 10-(2,5-dihydroxyphenyl)-9,10-dihydro-9-oxa-10-phosphaphenanthrene-10-oxide. Examples of the metal hydrates include aluminum hydroxide hydrate and magnesium hydroxide hydrate. Examples of the halogen-based flame retardants include hexabromobenzene, pentabromotoluene, ethylenebis(pentabromophenyl), ethylenebistetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, and 2,4,6-tris(tribromophenoxy)-1,3,5-triazine. Examples of the guanidine-based flame retardants include guanidine sulfamate and guanidine phosphate.

While there are no particular restrictions on the amount of the flame retardant added, it is preferred that the flame retardant be added in an amount of 0.01 to 5 parts by mass, more preferably 0.05 to 4 parts by mass, even more preferably 0.1 to 3 parts by mass, per 100 parts by mass of the component (A). When the amount of the flame retardant added is within these ranges, flame retardancy can be imparted to the resin composition without altering the mechanical properties of the curable resin composition.

### [Production Method]

As a method for producing the curable resin composition according to the present invention, there may be employed, for example, a method where the components (A) to (C) as well as the other additives that are added if necessary are mixed by, for example, a planetary mixer (manufactured by Inoue Mfg., Inc.) or by a mixer "Thinky Conditioning Mixer" (manufactured by Thinky Corporation), preferably a method where an organic solvent (e.g., cyclopentanone, cyclohexanone, mesitylene, anisole, dibutyl ether, diphenyl ether, 1,4-dioxane, N,N-dimethylformamide, N,N-dimethylacetamide, dimethyl sulfoxide, or N-methylpyrrolidone) is further added and mixed. By adding an organic solvent, it is possible to reduce the viscosity of the curable resin composition so that the components can be more uniformly mixed together. While the organic solvent may be distilled away under reduced pressure after mixing to obtain the curable resin composition, the mixture may be directly used without distillation or may be used with its concentration adjusted to the desired level, for example, when used as a film.

### WORKING EXAMPLES

The present invention will be described in greater detail hereunder with reference to working and comparative examples; the present invention should not be limited to the following working examples.

The molecular weights shown in the following examples are weight average molecular weights (Mw) measured by gel permeation chromatography (GPC) using polystyrene as a reference substance. The measurement conditions are given below:

### [GPC Measurement Conditions]

Developing solvent: tetrahydrofuran
Flow rate: 0.6 mL/min
Column: TSK Guardcolumn Super H-L
   TSKgel Super H4000 (6.0 mm I.D. × 15 cm × 1)
   TSKgel Super H3000 (6.0 mm I.D. × 15 cm × 1)
   TSKgel Super H2000 (6.0 mm I.D. × 15 cm × 2)
   (all manufactured by Tosoh Corporation)
Column temperature: 40°C
Sample injection volume: 20 µL (tetrahydrofuran solution with sample concentration of 0.5% by mass)
Detector: differential refractive index detector (RI)

### (A) First Cyclic Imide Resin

### (A-1)

To 2,000 g of N-methylpyrrolidone (water content of 0.5%) were added 575g (1.1 mol) of dimer diamine and 520 g (1.0 mol) of 4,4'-(4,4'-isopropylidenediphenoxy)diphthalic anhydride, followed by stirring at 25°C for 3 hours. Then, stirring was further performed at 150°C for 5 hours. To the resulting solution were added 196 g (2.0 mol) of maleic anhydride, 82 g (1.0 mol) of sodium acetate, and 204 g (2.0 mol) of acetic anhydride, followed by stirring at 80°C for 1 hour. Then, 5,000 g of toluene was added, and after washing with water and removal of water, the solvent was distilled away under reduced pressure to obtain bismaleimide (A-1) represented by the following formula (weight average molecular weight: 70,000, maleimide equivalent: 0.0077 mol/100 g): 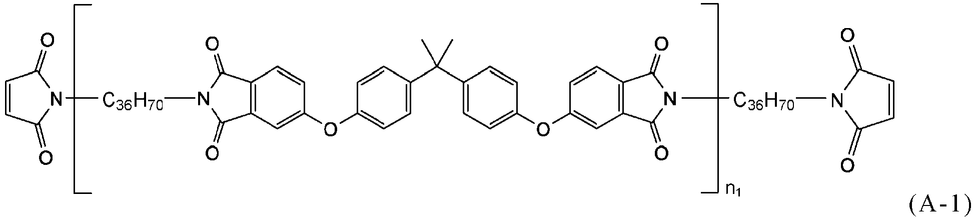 wherein n₁ ≈ 25 (average value).

### (A-2)

To 2,000 g of N-methylpyrrolidone (water content of 0.5%) were added 210g (1.05 mol) of 1,12-dodecanediamine and 218 g (1.0 mol) of pyromellitic anhydride, followed by stirring at 25°C for 3 hours. Then, stirring was further performed at 150°C for 5 hours. To the resulting solution were added 196 g (2.0 mol) of maleic anhydride, 82 g (1.0 mol) of sodium acetate, and 204 g (2.0 mol) of acetic anhydride, followed by stirring at 80°C for 1 hour. Then, 5,000 g of toluene was added, and after washing with water and removal of water, the solvent was distilled away under reduced pressure to obtain bismaleimide (A-2) represented by the following formula (weight average molecular weight: 80,000, maleimide equivalent: 0.0043 mol/100 g): 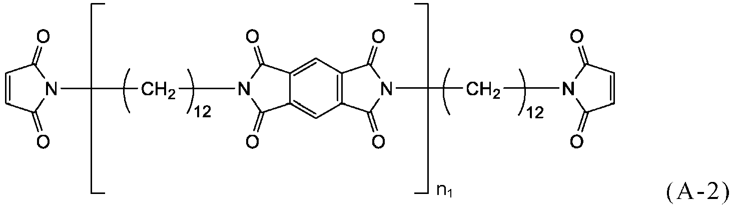 wherein n₁ ≈ 110 (average value).

### (A-3)

To 2,000 g of N-methylpyrrolidone (water content of 0.6%) were added 94 g (0.55 mol) of isophoronediamine, 278 g (0.55 mol) of 2,2-bis[4-(4-aminophenoxy)phenyl]propane, and 520 g (1.0 mol) of 4,4'-(4,4'-isopropylidenediphenoxy)diphthalic anhydride, followed by stirring at 25°C for 3 hours. Then, stirring was further performed at 150°C for 5 hours. To the resulting solution were added 196 g (2.0 mol) of maleic anhydride, 82 g (1.0 mol) of sodium acetate, and 204 g (2.0 mol) of acetic anhydride, followed by stirring at 80°C for 1 hour. Then, 5,000 g of toluene was added, and after washing with water and removal of water, the solvent was distilled away under reduced pressure to obtain bismaleimide (A-3) represented by the following formula (weight average molecular weight: 95,000, maleimide equivalent: 0.0065 mol/100 g): 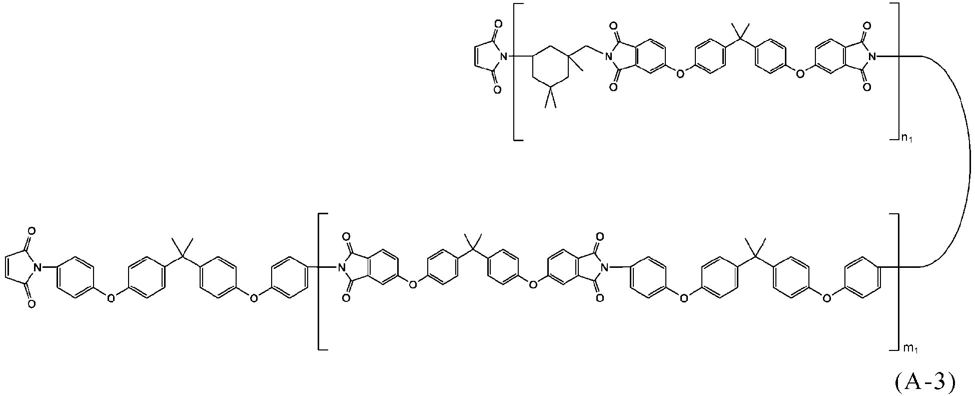 wherein n₁ ≈ 20 (average value) and m₁ ≈ 20 (average value).

### (B) Second Cyclic Imide Resin

### (B-1)

To 900 g of xylene were added 300 g (1.5 mol) of 1,12-dodecanediamine and 310 g (1.0 mol) of 4,4'-oxydiphthalic anhydride, followed by stirring at 25°C for 3 hours. Then, stirring was further performed at 140°C for 5 hours. To the resulting solution were added 196 g (2.0 mol) of maleic anhydride, 82 g (1.0 mol) of sodium acetate, and 204 g (2.0 mol) of acetic anhydride, followed by stirring at 80°C for 1 hour. Then, 2,000 g of toluene was added, and after washing with water and removal of water, the solvent was distilled away under reduced pressure to obtain bismaleimide (B-1) represented by the following formula (weight average molecular weight: 2,200, maleimide equivalent: 0.16 mol/100 g): 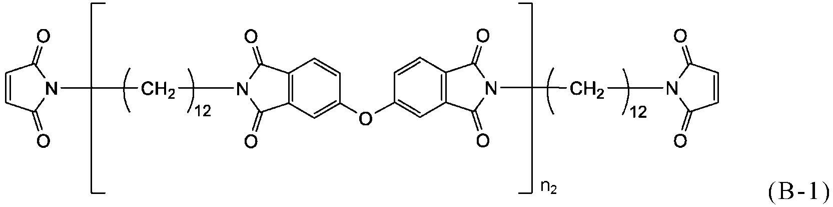 wherein n₂ ≈ 2 (average value).

### (B-2)

Maleimide compound represented by the following formula (BMI-3000, manufactured by Designer Molecules Inc.) (weight average molecular weight: 10,000, maleimide equivalent: 0.044 mol/100 g): 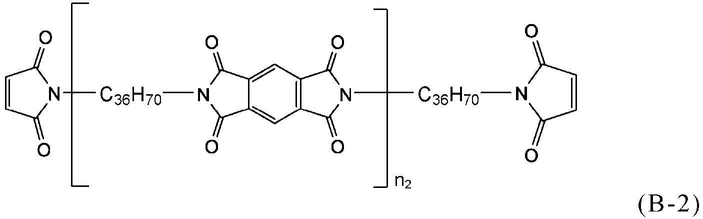 wherein n₂ ≈ 8 (average value).

### (B-3)

Maleimide compound represented by the following formula (BMI-1500, manufactured by Designer Molecules Inc.) (weight average molecular weight: 3,000, maleimide equivalent: 0.067 mol/100 g) 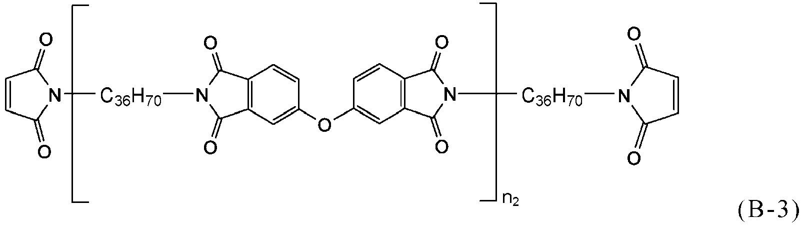 wherein n₂ ≈ 4 (average value).

### (B-4)

Maleimide compound represented by the following formula (SLK-6895, manufactured by Shin-Etsu Chemical Co., Ltd.)) (weight average molecular weight: 700, maleimide equivalent: 0.29 mol/100 g) 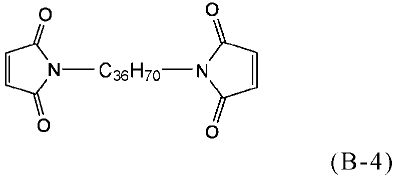 wherein n₂ ≈ 0 (average value).

### (B-5)

To 1,300 g of xylene were added 150 g (0.75 mol) of 1,12-dodecanediamine, 258 g (0.75 mol) of 4,4'-(1,4-phenylenediisopropylidene)bisaniline, and 310 g (1.0 mol) of 4,4'-oxydiphthalic anhydride, followed by stirring at 25°C for 3 hours. Then, stirring was further performed at 140°C for 5 hours. To the resulting solution were added 196 g (2.0 mol) of maleic anhydride, 82 g (1.0 mol) of sodium acetate, and 204 g (2.0 mol) of acetic anhydride, followed by stirring at 80°C for 1 hour. Then, 2,000 g of toluene was added, and after washing with water and removal of water, the solvent was distilled away under reduced pressure to obtain bismaleimide (B-5) represented by the following formula (weight average molecular weight: 3,300, maleimide equivalent: 0.11 mol/100 g): 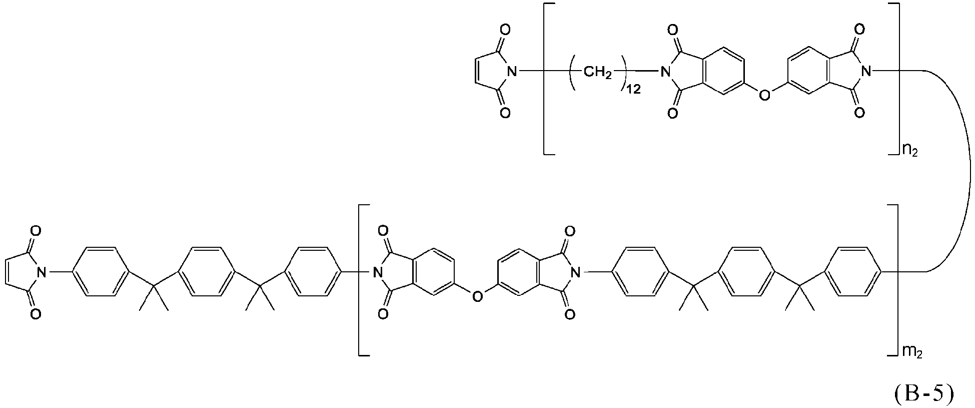 wherein n₂ ≈ 2 (average value) and m₂ ≈ 2 (average value).

### (C) Curing Catalyst

### (C-1) 2-Ethyl-4-methylimidazole

### (D) Adhesion-Imparting Agent

### (D-1) Bisphenol A type epoxy resin (Product name: "jER-828EL" manufactured by Mitsubishi Chemical Corporation)

### (E) Inorganic Filler

### (E-1) Silica "SFP-130MC" (Median diameter of primary particles: 0.6 µm) (manufactured by Denka Company Limited)

### [Method for Preparing Curable Resin Composition]

For each of Working Examples 1 to 11 and Comparative Examples 1 to 4, in addition to the composition (in parts by mass) shown in Table 1, cyclopentanone was added and mixed in an amount of 100 parts by mass per 100 parts by mass of a total of the individual components. The mixture was kneaded using a planetary mixer (manufactured by Inoue Mfg., Inc.) at 80°C for 30 minutes, followed by cooling to 25°C. The resulting solution was transferred to a flask, and the solvent was distilled away under reduced pressure to prepare a curable resin composition.

### [Glass-transition temperature (Tg) and Linear expansion coefficient]

The prepared curable resin composition was placed in a mold frame having a size of 30 mm × 40 mm × 100 µm in thickness and was press-cured at 180°C and 3 MPa for 1 hour to prepare a test sample. The prepared test sample underwent measurement by TMA Q400 (manufactured by TA Instruments) within a temperature range of -50°C to 300°C to obtain a graph from which the Tg and linear expansion coefficients thereof (a linear expansion coefficient α1 at a temperature below Tg and a linear expansion coefficient α2 at a temperature above Tg) were calculated. The measurement was performed under conditions of: test sample (cured product) of a size of 20 mm × 3 mm × 100 µm in thickness; rate of temperature rise 5°C/min; and tension mode. The results are as shown in Table 1.

### [Relative Permittivity and Dielectric Tangent]

The prepared curable resin composition was placed in a mold frame having a size of 30 mm × 40 mm × 100 µm in thickness and was press-cured at 180°C and 3 MPa for 1 hour to prepare a test sample. The prepared test sample was connected to a network analyzer (E5063-2D5 manufactured by Keysight Technologies) and a stripline (manufactured by KEYCOM Corporation) to measure the relative permittivity and the dielectric tangent at a frequency of 10 GHz. The results are shown in Table 1.

### [Peeling Strength]

The prepared curable resin composition was applied onto a PET film so as to have a thickness of 25 µm to prepare a resin film, and the resultant resin film was placed on a SUS plate so that the side opposite to the PET film is in contact with the SUS plate, which was laminated for 60 seconds at 80°C and vacuum level of 0.6hPa under the pressure of 0.3 MPa using Vacuum laminator V-130 (manufactured by Nikko Materials Co., Ltd.). Ater it was cooled to room temperature, the PET film was removed and a copper foil (Product name: TQ-M4-VSP, manufactured by Mitsui Mining & Smelting Co., Ltd.) having a thickness of 18 µm was placed thereon, and then it was laminated again for 60 seconds at 80°C and vacuum level of 0.6 hPa under the pressure of 0.3 MPa, and then cured by heating it at 180°C for 1 hour. The force (peeling strength) at which the copper foil was peeled from the resin film was determined using a tensile tester (Product name: Strograph VE-1D manufactured Toyo Seiki Seisaku-sho, Ltd.) in accordance with JIS-C-6481:1996, which is a test standard for copper-clad laminates for printed-wiring boards, at a width of 10 mm and a speed of 50 mm/minute in a 90° direction. The results are as shown in Table 1.

### [Desmear Resistance]

Onto a base plate provided with a copper wiring pattern of L/S = 100/100 was placed a resin film prepared in the manner as shown in the section of "Peeling strength" so that the side opposite to the PET film was in contact with the base plate, and the resin film was laminated for 60 seconds at 80°C and vacuum level of 0.6 hPa under the pressure of 0.3 MPa using Vacuum laminator V-130 (manufactured by Nikko Materials Co., Ltd.). After it was cooled to room temperature, the PET film was removed and it was cured by heat at 180°C for 1 hour. The cured base plate was drilled a via hole having a diameter of 100 µm using a CO² laser processing machine (Model LC-2Q252 manufactured by Via Mechanics, Ltd.), subjected to the desmear processing, and a cross section of it was cut out to measure the peeling distance between the resin and the copper arranged at the bottom of the via hole. The results are as shown in Table 1.

**Table 1**

| | | | Working Example 1 | Working Example 2 | Working Example 3 | Working Example 4 | Working Example 5 | Working Example 6 | Working Example 7 | Working Example 8 | Working Example 9 | Working Example 10 | Working Example 11 | Comparative Example 1 | Comparative Example 2 | Comparative Example 3 | Comparative Example 4 |
|---|---|---|---|---|---|---|---|---|---|---|---|---|---|---|---|---|---|
| (A) | (A-1) | | 100 | 100 | 100 | 100 | 100 | | | 100 | 100 | 100 | 50 | | | 100 | 100 |
| | (A-2) | | | | | | | 100 | | | | | 50 | | | | |
| | (A-3) | | | | | | | | 100 | | | | | | | | |
| (B) | (B-1) | | 20 | | | | | 20 | 20 | 40 | 5 | 10 | 20 | | 10 | | 60 |
| | (B-2) | | | 20 | | | | | | | | | | 100 | 80 | | |
| | (B-3) | | | | 20 | | | | | | | | | | | | |
| | (B-4) | | | | | 20 | | | | | | | | | | | |
| | (B-5) | | | | | | 20 | | | | | | | | | | |
| (C) | (C-1) | | 1 | 1 | 1 | 1 | 1 | 1 | 1 | 1 | 1 | 8 | 2 | 1 | 2 | 1 | 1 |
| (D) | (D-1) | | | | | | | | | | | | 5 | | 5 | | |
| (E) | (E-1) | | | | | | | | | | | | 300 | | | | |
| Evaluation results | Tg | °C | 40 | 40 | 35 | 45 | 65 | 70 | 150 | 40 | 40 | 35 | 60 | 40 | 50 | 40 | 40 |
| | Linear expansion coefficient (α1) | ppm/K | 120 | 120 | 130 | 110 | 70 | 90 | 65 | 120 | 120 | 120 | 65 | 130 | 110 | 120 | 120 |
| | linear expansion coefficient (α2) | ppm/K | 240 | 230 | 240 | 220 | 160 | 190 | 160 | 250 | 230 | 240 | 120 | 230 | 220 | 230 | 250 |
| | Relative Permittivity (10GHz) | | 2.5 | 2.5 | 2.5 | 2.6 | 2.7 | 2.6 | 2.7 | 2.6 | 2.5 | 2.7 | 3.0 | 2.5 | 2.6 | 2.5 | 2.6 |
| | Dielectric Tangent (10GHz) | | 0.0016 | 0.0017 | 0.0015 | 0.0018 | 0.0019 | 0.0017 | 0.0020 | 0.0017 | 0.0015 | 0.0020 | 0.0012 | 0.0017 | 0.0019 | 0.0015 | 0.0018 |
| | Peeling Strength | kN/m | 1.6 | 1.7 | 1.5 | 1.1 | 1.1 | 1.4 | 1.1 | 1.4 | 1.0 | 1.2 | 1.2 | 1.3 | 1.4 | 0.4 | 1.4 |
| | Peeling distance after desmear treatment | µm | 0.0 | 0.0 | 0.0 | 1.1 | 0.9 | 0.2 | 0.0 | 2.5 | 1.9 | 0.6 | 0.3 | 12.0 | 11.2 | 8.9 | 6.4 |

The cured products of the curable resin compositions of Working Examples 1 to 11 had low relative permittivity and low dielectric tangent and resulted in very small peeling distances after desmear treatment.

In Comparative Examples 1 and 2, the absence of the high-molecular-weight component (A) rendered the resin highly prone to decomposition by the desmear treatment, resulting in an extended peeling distance after the desmear treatment.

In Comparative Example 3, the absence of the low-molecular-weight component (B) reduced the resin's adhesiveness to copper, resulting in an extended peeling distance after the desmear treatment.

In Comparative Example 4, an excessive amount of low-molecular-weight component (B) rendered the resin highly prone to decomposition by desmear treatment, resulting in an extended peeling distance after the desmear treatment.

## Claims

1. A curable resin composition comprising:
(A) a first cyclic imide resin represented by formula (1) defined as 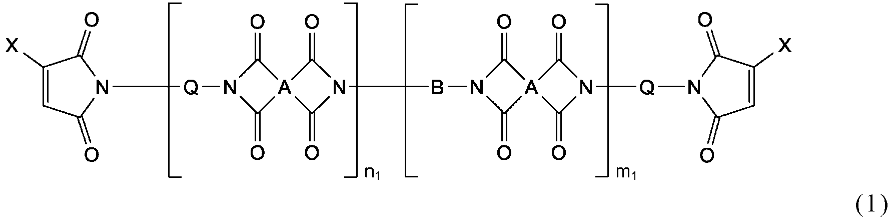 wherein, in the formula (1), each A independently represents a tetravalent organic group having a cyclic structure, each Q independently represents a divalent aliphatic hydrocarbon group having 6 or more carbon atoms and optionally containing heteroatom(s) or a dimer acid frame-derived divalent hydrocarbon group, each B independently represents an arylene group having 6 or more carbon atoms and optionally containing heteroatom(s), each X is a hydrogen atom or a methyl group, n₁ is a number of 0 to 200 and m₁ is a number of 0 to 200 provided that n₁ + m₁ satisfies 21 to 400, and repeating units identified by n₁ and m₁ may be present in any order;
(B) a second cyclic imide resin in an amount of 1 to 40 parts by mass per 100 parts by mass of the first cyclic imide resin (A), said second cyclic imide resin represented by formula
(2) defined as 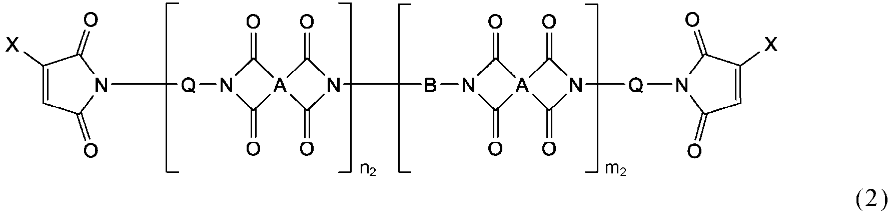 wherein, in the formula (2), A, Q, B, and X are as defined above, n₂ is a number of 0 to 10 and m₂ is a number of 0 to 10 provided that n₂ + m₂ satisfies 0 to 20, and repeating units identified by n₂ and m₂ may be present in any order; and
(C) a curing catalyst in an amount of 0.01 to 10 parts by mass per 100 parts by mass of the first cyclic imide resin (A).

2. The curable resin composition according to claim 1, wherein the second cyclic imide resin (B) is a cyclic imide resin represented by formula (3) defined as 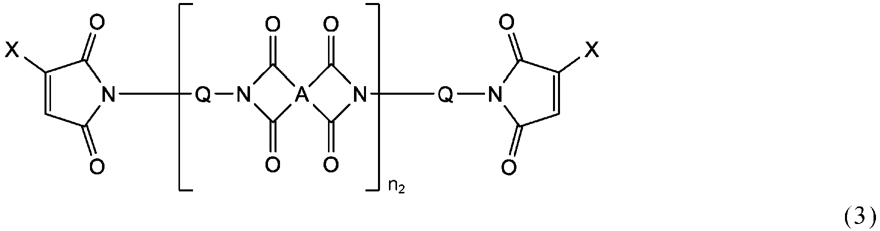 wherein, in the formula (3), A, Q, X, and n₂ are as defined above.
